# EUROPÄISCHE PATENTANMELDUNG

(11) **EP 4 556 648 A1**
(43) Veröffentlichungstag der Anmeldung: **21.05.2025**
(21) Anmeldenummer: 24188494.9
(22) Anmeldetag: 13.07.2024
(51) Int. Cl.: E04D 13/14, F24S 25/61, H02S 20/23

(54) **VERANKERUNGSANORDNUNG FÜR DÄCHER UND VERFAHREN ZU DEREN BEFESTIGUNG AUF EINEM DACH**

(30) Priorität: 18.11.2023 DE 102023004722
(71) Anmelder: Noreiks - solutions in sales GmbH, 72290 Lossburg (DE)
(72) Erfinder: Noreiks, Christoph, 72290 Lossburg (DE)
(74) Vertreter: Keogh, Craig Brendan

(57) **Zusammenfassung**

Eine Verankerungsanordnung (50, 55) und ein Verfahren (200) zur Befestigung einer Anlage auf einer Abdichtungslage (60) eines im wesentlichen flachen Daches (100). Die Verankerungsanordnung (50, 55) umfasst eine Verankerungsplatte (10), die einen Montagestift (15) zur lösbaren Verbindung der Anlage aufweist. Der Montagestift (15) ist starr an einer Seite der Verankerungsplatte (10) befestigt. Die Verankerungsanordnung (50, 55) umfasst ferner eine Manschette (20) mit einer Öffnung (25) zur Aufnahme des Montagestifts (15). Die Öffnung (25) erstreckt sich von einer Unterseite zu einer Oberseite der Manschette (20). Die Manschette (20) ist wesentlich größer dimensioniert als die Verankerungsplatte (10) und definiert, wenn die Öffnung (25) in den Montagestift (15) eingreift, einen ersten Abschnitt (20a) und einen zweiten Abschnitt (20b) der Manschette (20). Der erste Abschnitt (20a) überlappt mit der Verankerungsplatte (10), und der zweite Abschnitt (20b) erstreckt sich über den Umfang der Verankerungsplatte (10) hinaus. Der zweite Abschnitt (20b) ist so gestaltet, dass er mit der Abdichtungslage (60) verbunden werden kann, so dass die Verankerungsplatte (10) im Gebrauch durch diese Verbindung fest zwischen der Manschette (20) und der Abdichtungslage (60) eingeklemmt ist, wodurch die Verankerungsanordnung (50, 55) an dem im Wesentlichen flachen Dach (100) befestigt wird.

## Beschreibung

### Technisches Gebiet

Die vorliegende Erfindung betrifft eine Verankerungsanordnung zur Befestigung einer Anlage auf einer Abdichtungslage eines im Wesentlichen flachen Daches eines Gebäudes. Die Erfindung betrifft auch ein Verfahren zur Befestigung einer Verankerungsanordnung gemäß einer Ausführungsform der Erfindung an einer Abdichtungslage eines im Wesentlichen flachen Daches eines Gebäudes.

### Hintergrund der Erfindung

Es ist allgemein bekannt, dass Dächer moderner Gebäude in erster Linie dazu dienen, die Gebäude vor äußeren Einflüssen, wie Wind und Wetter, zu schützen. Zu letzterem gehören Feuchtigkeit aus der Luft sowie Regen und Schnee, wofür solche Dächer fast immer wasserdicht abgedichtet werden. Für die Bedachung von Gebäuden mit Flachdächern oder Dächern mit geringer Neigung werden in der Regel wasserdichte Membranen verwendet, um das Eindringen von Feuchtigkeit in das Gebäude zu verhindern. Große Bahnen solcher Membranen werden je nach Material der Membran miteinander verschweißt oder verklebt, um durchgehende Bahnen zu bilden, die die gesamte Oberfläche des Daches abdichten und schützen.

Flachdächer eignen sich besonders gut für die Montage von technischen Anlagen wie Heizungs-, Lüftungs- und Klimaanlagen (HVAC), photovoltaischen und thermischen Solaranlagen, Blitzschutz, Antennen, Satellitenschüsseln und Werbeanlagen. Diese Anlagen werden in der Regel auf gewerblichen Objekten betrieben, zum Beispiel, aber nicht ausschließlich, auf Lagerhallen, Logistikzentren, Produktionsstätten, Sport- oder Veranstaltungshallen. Aber auch auf Flachdächern von Wohngebäuden, wie z. B. Häusern, Wohnungen oder Garagen, werden solche Anlagen gerne genutzt.

Die Montage einer oder mehrerer dieser Anlagen auf dem Dach erfordert häufig die Verwendung eines Montagesystems und dessen Befestigung auf dem Gebäudedach an mehreren Verankerungspunkten, was eine Durchdringung des Daches an den entsprechenden Verankerungspunkten erfordert. An jedem Verankerungspunkt wird in der Regel eine Zugschraube oder ein ähnliches mechanisches Befestigungselement verwendet, das die schützende Abdichtungslage/Dachhaut und andere Schichten des Daches durchdringt und dadurch die Dichtigkeit des Daches beeinträchtigt. Die Verwendung mechanischer Befestigungselemente zur Befestigung des Montagesystems auf dem Dach hat außerdem den Nachteil, dass sie an den Verankerungspunkten thermische Spannungen auf die Dachabdichtung und ihre Klebemittel ausüben.

Auch die Befestigung solcher Montagesysteme auf Dächern ist komplizierter und kostspieliger als nötig. Erstens müssen die mechanischen Befestigungselemente oft weiter in die Dachsparren oder -binder eindringen, um zusätzliche Festigkeit gegen starken Wind zu erhalten, und bevor Löcher gebohrt werden können, müssen diese Sparren oder Binder erst einmal gefunden werden. Zweitens muss die durchdrungene Abdichtungslage auf dem Dach wieder abgedichtet werden, um das Risiko des Eindringens von Feuchtigkeit in das Dach und die daraus resultierenden Schäden am Gebäude und seinem Inhalt zu verringern. Aus diesem Grund sind Dachbefestigungssysteme, die das Dach nicht durchdringen, vorzuziehen.

Ballastierte Montagesysteme auf Dächern sind beliebt, da sie keine Durchdringung der schützenden Abdichtungslage erfordern. Bei solchen Systemen wird die Anlage durch ein zusätzliches Gewicht belastet, das den durch den Wind erzeugten Auftriebs- und Druckkräften entgegenwirkt und so dafür sorgt, dass die Anlage an ihrem Platz bleibt und bei extremem Wind nicht vom Dach gehoben wird. Dächer sind jedoch oft nur für eine begrenzte statische Belastung ausgelegt, die in der Regel nicht ausreicht, um das Gewicht der Anlage plus das zusätzliche Gewicht des Ballasts zu tragen. Außerdem kann das Aufbringen des zusätzlichen Gewichts, z. B. Betonblöcke oder Steine, die Abdichtungslage lokal beschädigen, wenn bei der Montage und der späteren Kontrolle, Wartung, Reparatur usw. der Anlage nicht sorgfältig vorgegangen wird.

Daher ist eine alternative Lösung für die Befestigung von technischen Anlagen auf flachen oder flach geneigten Dächern erforderlich.

### Zusammenfassung der Erfindung

Es ist daher mindestens eine Aufgabe der vorliegenden Erfindung, eine Vorrichtung zur sicheren Befestigung einer Anlage auf einer Abdichtungslage eines im Wesentlichen flachen Daches auf einfache und flexible Weise bereitzustellen, die jedoch die Notwendigkeit einer Dachdurchdringung oder eines Ballastierungssystems zur sicheren Befestigung der Anlage auf dem Dach vermeidet.

Diese Aufgabe wird durch die Bereitstellung einer Verankerungsanordnung mit den Merkmalen des Patentanspruchs 1 in seiner Gesamtheit gelöst. Erfindungsgemäß weist die Verankerungsanordnung eine Verankerungsplatte und eine Manschette auf. Die Verankerungsplatte enthält einen Montagestift, der starr an einer Seite der Verankerungsplatte befestigt ist, um die Anlage lösbar zu verbinden. Die Manschette weist eine Öffnung auf, die sich von einer Unterseite zu einer Oberseite der Manschette erstreckt, um den Montagestift aufzunehmen. Die Manschette ist wesentlich größer dimensioniert als die Verankerungsplatte und definiert, wenn die Öffnung in den Montagestift eingreift, einen ersten und einen zweiten Abschnitt der Manschette. Der erste Abschnitt überlappt die darunter liegende Verankerungsplatte und der zweite Abschnitt erstreckt sich über den Umfang der Verankerungsplatte hinaus. Der zweite Abschnitt ist so gestaltet, dass er mit der darunter liegenden Abdichtungslage verbunden werden kann, so dass die Verankerungsplatte im Gebrauch durch diese Verbindung fest zwischen der Manschette und der Abdichtungslage eingeklemmt wird, wodurch die Verankerungsanordnung an dem im Wesentlichen flachen Dach befestigt wird.

Gemäß einigen Ausführungsformen der vorliegenden Erfindung wird der zweite Abschnitt der Manschette mit der Abdichtungslage verbunden, indem der zweite Abschnitt erhitzt und gegen die darunter liegende Abdichtungslage gepresst oder gedrückt wird, so dass der zweite Abschnitt thermisch mit der Abdichtungslage des im Wesentlichen flachen Daches verschmilzt.

Gemäß weiteren Ausführungsformen wird der zweite Abschnitt der Manschette mit der Abdichtungslage verbunden, indem ein Klebstoff auf die Unterseite des zweiten Abschnitts und/oder die Oberseite der darunter liegenden Abdichtungslage aufgetragen und der zweite Abschnitt der Manschette gegen die Abdichtungslage gepresst oder gedrückt wird, so dass der zweite Abschnitt fest mit der Abdichtungslage des im Wesentlichen flachen Daches verbunden wird.

Da die Verankerungsanordnung ausschließlich durch Verschweißung bzw. Verklebung des zweiten Abschnitts der Manschette mit der Abdichtungslage auf dem im Wesentlichen flachen Dach befestigt wird, ist es nicht erforderlich, das Dach zu durchdringen, zum Beispiel mit mechanischen Befestigungsmitteln, oder ein Ballastierungssystem zu verwenden, um die Verankerungsanordnung auf dem Dach zu befestigen. Die Verwendung der erfindungsgemäßen Verankerungsanordnung zur Befestigung der Anlage auf dem Dach beeinträchtigt somit nicht die Integrität des im Wesentlichen flachen Daches. Dies ist sehr vorteilhaft für den Schutz der Abdichtungslage und anderer Schichten des Daches sowie für die Verlängerung der Nutzungsdauer des Daches.

Gemäß einer weiteren Ausführungsform der vorliegenden Erfindung ist die Manschette so dimensioniert, dass sie einen zweiten Abschnitt definiert, in dem sich die Manschette mindestens 8 cm, vorzugsweise mindestens 10 cm, über den Umfang der Verankerungsplatte hinaus erstreckt. Dies vergrößert die Fläche für die Verbindung des zweiten Abschnitts mit der darunter liegenden Abdichtungslage, wodurch die Festigkeit der Verbindung zwischen dem zweiten Abschnitt der Manschette und der Abdichtungslage verbessert wird und somit eine sicherere Befestigung der Verankerungsanordnung an dem im Wesentlichen flachen Dach ermöglicht wird.

In einigen Ausführungsformen besteht die Verankerungsplatte aus Stahl, insbesondere aus rostfreiem Stahl. In anderen Ausführungsformen besteht die Verankerungsplatte insbesondere aus verzinktem Stahl oder Aluminium. Diese Materialien haben den Vorteil, dass die Verankerungsplatte korrosionsbeständig ist, was zu einer längeren Lebensdauer auf dem Dach führt.

Gemäß einigen Ausführungsformen der vorliegenden Erfindung besteht die Manschette aus Bitumen, Polyvinylchlorid (PVC), Keton-Ethylen-Ester (KEE), chlorsulfoniertem Polyethylen (CSPE), Ethylen-Propylen-Dien-Monomer (EPDM) oder thermoplastischem Polyolefin (TPO) Material.

Gemäß einigen Ausführungsformen der vorliegenden Erfindung umfasst die Manschette mindestens eine Verstärkungsschicht. Beispielsweise kann die Manschette eine Gewebeschicht oder eine Drahtgitterschicht umfassen. Durch die Einarbeitung einer Verstärkungsschicht in das Material der Manschette wird die Gesamtzugfestigkeit der Manschette verbessert, was eine zuverlässigere Befestigung der Anlage auf dem im Wesentlichen flachen Dach ermöglicht.

Gemäß einigen Ausführungsformen ist der Montagestift so konfiguriert, dass er mindestens 5 mm aus der Oberseite der Manschette hervorsteht, wenn die Montagestift der Verankerungsplatte in die Öffnung der Manschette eingreift. Gemäß weiteren Ausführungsformen umfasst der Montagestift ein Innengewinde, ein Außengewinde, eine Stiftverbindungsvorrichtung oder eine Verriegelungsvorrichtung, z. B. eine Schnapp- oder Klickbefestigung, um die Anlage lösbar mit der Verankerungsanordnung zu verbinden. Auf diese Weise kann die Anlage angebracht werden, nachdem die Verankerungsanordnung auf dem Dach befestigt ist, und/oder sie kann zu Wartungs-, Reparatur- oder Austauschzwecken entfernt werden, ohne dass die Membranoberfläche des im Wesentlichen flachen Daches beschädigt wird.

Gemäß einigen Ausführungsformen der vorliegenden Erfindung umfasst die Verankerungsanordnung ferner ein Verlängerungselement, das so konfiguriert ist, dass es die Anlage lösbar mit dem Montagestift verbindet oder koppelt, ein Befestigungselement, das so konfiguriert ist, dass es die technische Anlage mit dem Verlängerungselement verbindet, und eine Auflagerhilfe zur Befestigung der Anlage auf dem im Wesentlichen flachen Dach des Gebäudes. Die Bereitstellung der Auflagerhilfe ist völlig optional. Indem die Anlage nicht direkt am Montagestift, sondern über das Befestigungselement am Verlängerungselement befestigt wird, wird eine Montageerhöhung über der Oberfläche der Manschette erreicht. Die Höhe der Überhöhung wird durch die Länge des Verlängerungselements bestimmt. Dies hat den Vorteil, dass die Verankerungsanordnung und damit der Anschlusspunkt der technischen Anlage bei Dächern, die mit einer Kiesschicht oder anderen Zuschlagstoffen belegt sind, beliebig über den Montagestift erhöht werden kann.

Gemäß weiteren Ausführungsformen weisen der Montagestift und das Befestigungselement ein Außengewinde und das Verlängerungselement eine Gewindehülse auf. Vorzugsweise weist die Gewindehülse ein Innengewinde auf, das mit dem Außengewinde des Montagestifts und des Befestigungselements übereinstimmt. Dies ermöglicht eine feste und zuverlässige Verbindung der Anlage mit der Verankerungsanordnung, die gleichzeitig leicht gelöst werden kann.

Eine weitere Aufgabe der vorliegenden Erfindung ist es, ein Verfahren zur Befestigung der Verankerungsanordnung gemäß den obigen Ausführungsformen an einer Abdichtungslage eines im wesentlichen flachen Daches bereitzustellen, das die Notwendigkeit mechanischer Befestigungsmittel, z.B. Schrauben, und damit das Durchdringen der Abdichtungslage des Daches vermeidet und das auch nicht den Einsatz eines Ballastierungssystems erfordert. Das Verfahren umfasst: Positionieren der Verankerungsplatte auf der Abdichtungslage an einer vorbestimmten Stelle auf dem Dach; Anordnen der Manschette über der Verankerungsplatte, so dass die Öffnung den Montagestift aufnimmt; und Verbinden des zweiten Abschnitts der Manschette mit der darunter liegenden Abdichtungslage, so dass die Verankerungsplatte fest zwischen der Manschette und der Abdichtungslage eingeklemmt wird, wodurch die Verankerungsanordnung an dem im Wesentlichen flachen Dach befestigt wird.

Die Befestigung der Verankerungsanordnung auf dem Dach nach dem Verfahren der vorliegenden Erfindung beeinträchtigt nicht die Integrität des im Wesentlichen flachen Daches. Dies ist sehr vorteilhaft für den Schutz der Dachhaut oder Abdichtungslage und anderer Schichten des Daches sowie für die Verlängerung der Lebensdauer des Daches. Außerdem wird durch das Fehlen von Durchdringungen die Notwendigkeit vermieden, das Dach gegen Witterungseinflüsse, z. B. Feuchtigkeit, abzudichten, was zu einem einfacheren Verfahren zur Befestigung der Anlage auf dem Dach führt.

Gemäß einigen Ausführungsformen der vorliegenden Erfindung umfasst das Verbinden das Erhitzen und Pressen des zweiten Abschnitts der Manschette, so dass der zweite Abschnitt thermisch mit der Abdichtungslage des Daches verschmilzt.

Gemäß einigen Ausführungsformen umfasst das Verbinden das Auftragen eines Klebstoffs auf die Unterseite des zweiten Abschnitts und/oder die obere Schicht der Abdichtungslage und das anschließende Pressen des zweiten Abschnitts gegen die Abdichtungslage, so dass der zweite Abschnitt fest mit der Abdichtungslage verbunden wird.

Gemäß einigen Ausführungsformen umfasst das Verfahren ferner die Kopplung der technischen Anlage mit dem Montagestift der Verankerungsplatte, wodurch die Anlage auf dem im Wesentlichen flachen Dach befestigt wird.

Besteht die Verankerungsanordnung aus einem Verlängerungselement und einem Befestigungselement, so umfasst das Verfahren in einigen Ausführungsformen ferner die Verbindung oder die Verkopplung der Anlage mit dem Verlängerungselement über das Befestigungselement.

### Kurzbeschreibung der Zeichnungen

**Fig. 1** ist eine Explosionsdarstellung einer Verankerungsanordnung gemäß einer ersten Ausführungsform.
**Fig. 2** ist eine Querschnittsansicht der Verankerungsanordnung aus **Fig. 1****,** die auf einem Dach befestigt ist.
**Fig. 3** ist eine Explosionsdarstellung einer Verankerungsanordnung gemäß einer weiteren Ausführungsform.
**Fig. 4** ist eine Querschnittsansicht der Verankerungsanordnung aus **Fig. 3****,** die auf einem Dach befestigt ist.
**Fig. 5** ist ein schematisches Flussdiagramm, das ein Verfahren zur Befestigung einer Verankerungsanordnung an einer Schicht auf einem Dach zeigt.

Um das Verständnis der Erfindung zu erleichtern, wurden gleiche oder ähnliche Elemente, die den Figuren gemeinsam sind, gegebenenfalls mit identischen Bezugsziffern bezeichnet. Sofern nicht anders angegeben, sind die in den Figuren gezeigten Merkmale nicht maßstabsgetreu, sondern nur zur Veranschaulichung dargestellt.

### Detaillierte Beschreibung der bevorzugten Ausführungsformen

Die vorliegende Erfindung wird nun unter Bezugnahme auf die beigefügten Zeichnungen anhand der folgenden Beispiele beschrieben, die mehr als eine relevante Ausführungsform beschreiben können, die in den Anwendungsbereich der beigefügten Ansprüche fällt.

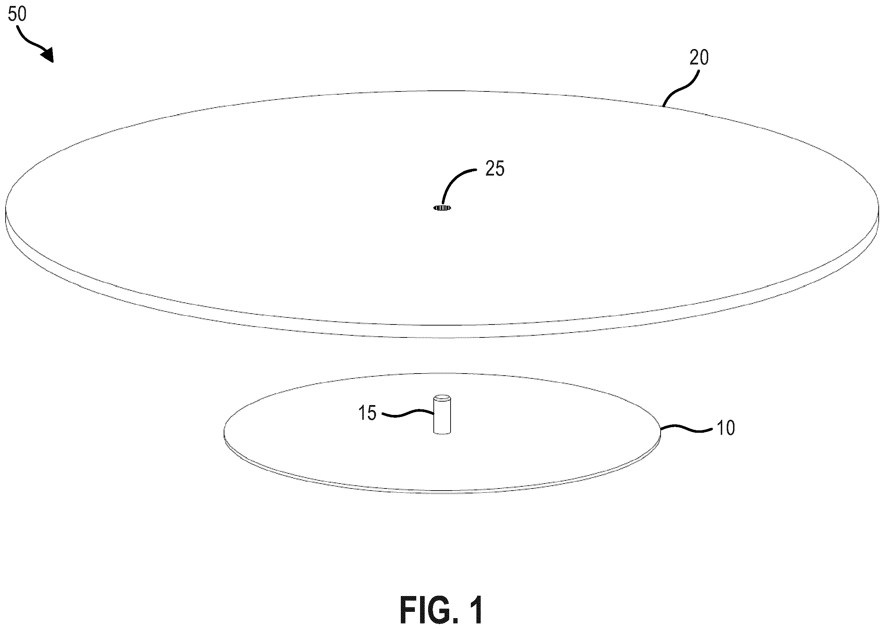

**Fig. 1** zeigt eine Explosionsdarstellung einer Verankerungsanordnung 50 gemäß einer ersten Ausführungsform zur Befestigung einer technischen Anlage auf einer Abdichtungslage eines im Wesentlichen flachen Gebäudedachs. Wie dargestellt, umfasst die Verankerungsanordnung 50 gemäß der ersten Ausführungsform eine Verankerungsplatte 10 und eine Manschette 20. Die Verankerungsplatte 10 und die Manschette 20 sind so konfiguriert, dass sie miteinander zusammenwirken, um die Anlage (nicht dargestellt) auf dem Dach (ebenfalls nicht dargestellt) ohne die Verwendung von Schrauben oder anderen mechanischen Befestigungselementen zu befestigen, wie im Folgenden näher beschrieben.

Die Verankerungsplatte 10 ist in der Zeichnung als ebene, kreisförmige Platte dargestellt, aber der Fachmann wird verstehen, dass die Verankerungsplatte auch andere Formen annehmen kann. Zum Beispiel kann die Verankerungsplatte 10 alternativ rechteckig, dreieckig, länglich sein oder andere geometrische, polygonale oder gekrümmte Formen annehmen. So kann die Verankerungsplatte 10 beispielsweise auch eine rechteckige Form mit abgerundeten Ecken haben. Die Verankerungsplatte 10 und die Manschette 20 können auch komplementäre Formen annehmen, wie dies in der nachfolgenden Beschreibung der Manschette 20 näher erläutert wird, was jedoch für die Erfindung nicht wesentlich ist. Die in **Fig. 1** dargestellten Formen sind nur beispielhaft, d.h. nicht einschränkend.

Die Verankerungsplatte 10 kann ganz oder teilweise aus einem Metall, wie z. B. Stahl, oder einem anderen geeigneten Metallmaterial bestehen. Die Verankerungsplatte 10 kann zum Beispiel durch Ziehen, Pressen, Walzen oder Stanzen hergestellt werden. Darüber hinaus kann die Verankerungsplatte aus einem oder mehreren witterungsbeständigen Metallen wie rostfreiem Stahl, Aluminium und/oder verzinktem Stahl hergestellt werden. Natürlich können auch andere Materialien wie Kunststoff, Keramik, Verbundwerkstoffe usw. verwendet werden. Welches Material für die Verankerungsplatte gewählt wird, hängt letztlich von der zu montierende Anlage ab. Bei Dächern hat sich herausgestellt, dass wetterfeste Metalle für die Verankerungsplatte 10 vorzuziehen sind. Die genaue Dicke der Verankerungsplatte 10 hängt auch vom Material ab, aus dem die Verankerungsplatte 10 hergestellt ist, sowie von der Art der Installation, die mit der Verankerungsanordnung 50 auf dem Dach befestigt werden soll. Bei vielen Anwendungen hat sich gezeigt, dass eine Metalldicke zwischen 1,5 mm und 2 mm ausreicht, um die auf die Verankerungsplatte 10 einwirkenden Kräfte aufzunehmen und zu verteilen.

Die Verankerungsplatte 10 trägt dazu bei, die von der Anlage auf einen Montagestift 15 (siehe unten) ausgeübten Kräfte auf einen Teil der Dachfläche zu verteilen, auf der die Verankerungsplatte 10 angeordnet ist. Die Verankerungsplatte 10 ist typischerweise so dimensioniert und geformt, dass sie die auf sie einwirkenden Kräfte ausreichend über die Oberfläche des Daches verteilt, um eine Beschädigung des Daches zu vermeiden, aber auch um einen ausreichenden Reibungseingriff mit der Oberfläche des Daches aufrechtzuerhalten, um Gleitbewegungen der Verankerungsplatte 10 in Bezug auf das Dach zu vermeiden. Eine Überdimensionierung der Verankerungsplatte 10 würde jedoch die Produktionskosten erhöhen, ohne einen zusätzlichen Nutzen zu bringen. Die genauen Abmessungen und die Form der Verankerungsplatte 10 hängen daher sehr stark von der zu befestigende Anlage ab. Der Erfinder der vorliegenden Erfindung hat festgestellt, dass eine kreisförmige Verankerungsplatte mit einem Durchmesser von etwa 20 cm aus Stahl mit einer Dicke von etwa 1,5 mm ausreicht, um einer Kraft von etwa 1000 N standzuhalten, und dass sie für die Befestigung einer Vielzahl von Photovoltaik-Solaranlagen auf einem im Wesentlichen flachen Dach geeignet ist.

Zur lösbaren Verbindung der Anlage mit der Verankerungsanordnung 50 ist ein Montagestift 15 vorgesehen, der starr an einer Seite der Verankerungsplatte 10 befestigt ist. Typischerweise erstreckt sich der Montagestift 15 von der Seite der Verankerungsplatte 10 aus nach außen, die der Seite gegenüberliegt, die auf dem Dach des Gebäudes aufliegt. In der in **Fig. 1** dargestellten Ausrichtung erstreckt sich der Montagestift 15 von einer Oberseite der Verankerungsplatte 10 aus, was jedoch relativ zur dargestellten Ausrichtung der Verankerungsplatte 10 ist. Außerdem hängt die Länge des Montagestifts 15 von der Dicke der Manschette 20 ab, in die er eingreift. Der Montagestift 15 muss über die Manschette 20 hinausragen, damit erfür die Kopplung der Anlage zugänglich ist. In einer Ausführungsform ragt der Montagestift 15 mindestens 5 mm über die Oberseite der Manschette hinaus, wenn die Verankerungsplatte 10 in die Manschette 20 eingreift. Bei einer Manschette aus Standard-Bitumenmaterial beispielsweise hat der Montagestift 15 typischerweise eine Länge von mindestens 11 mm. Bei einer Manschette aus Standard-PVC hingegen hat der Montagestift 15 typischerweise eine Länge von mindestens 6.8 mm. Der Fachmann wird jedoch verstehen, dass die Länge des Montagestifts 15 nicht durch solche Ausführungsformen begrenzt ist.

In **Fig. 1** ist der Montagestift 15 als integraler Bestandteil der Verankerungsplatte 10 dargestellt und wird daher als integrales Teil mit der Verankerungsplatte 10 hergestellt. In alternativen Ausführungsformen könnten der Montagestift 15 und die Verankerungsplatte 15 jedoch auch als separate Teile hergestellt und anschließend durch ein oder mehrere bekannte Herstellungsverfahren zusammengefügt werden. Zum Beispiel könnte der Montagestift 15 alternativ mit der Verankerungsplatte 10 durch einen Befestigungsmechanismus wie eine Schweißnaht oder durch eine Gewindeverbindung wie einen Bolzen verbunden werden.

Um die Herstellungskosten zu senken, kann der Montagestift 15 aus demselben Material wie die Verankerungsplatte 10 hergestellt werden, insbesondere wenn der Montagestift 15 als integraler Bestandteil der Verankerungsplatte 10 gefertigt wird. Dies ist jedoch nicht unbedingt erforderlich, insbesondere wenn die Verankerungsplatte 10 und der Montagestift 15 als separate Teile hergestellt werden. So können die Verankerungsplatte 10 und der Montagestift 15 aus unterschiedlichen Materialien bestehen. Zur Herstellung des Montagestifts 15 kann jedes der oben für die Zusammensetzung der Verankerungsplatte 10 beschriebenen Materialien verwendet werden.

Wie dargestellt, ist der Montagestift 15 vorzugsweise im Wesentlichen mittig auf der Verankerungsplatte 10 angeordnet. Der Fachmann wird jedoch verstehen, dass dies nicht unbedingt erforderlich ist. In anderen Ausführungsformen kann der Montagestift 15 beispielsweise außermittig auf der Verankerungsplatte 10 angeordnet sein. Außerdem ist der Montagestift 15 zwar so dargestellt, dass er sich senkrecht von der Oberfläche der Verankerungsplatte 10 aus erstreckt, dies ist jedoch nicht unbedingt erforderlich. Der Montagestift 15 kann auch in einem bestimmten Winkel zur Oberfläche der Verankerungsplatte 10 verlaufen.

Der Montagestift 15 ist so beschaffen, dass er eine lösbare Verbindung zwischen der Anlage und der Verankerungsanordnung 50 ermöglicht. Der Montagestift 15 kann beispielsweise ein Innengewinde, ein Außengewinde, eine Bolzenverbindungsvorrichtung oder eine Verriegelungsvorrichtung, z. B. eine Schnapp- oder Klickbefestigung, zur lösbaren Verbindung der Anlage mit der Verankerungsanordnung 50 aufweisen. In einer Ausführungsform kann der Montagestift 15 ein Gewindebolzen sein, der mit der Verankerungsplatte 10 verschweißt, hartgelötet oder verlötet ist. Auf diese Weise kann die Anlage mühelos an der Verankerungsanordnung 50 befestigt oder von ihr gelöst werden. Dies hat den Vorteil, dass die Verankerungsanordnung 50 auf dem Dach montiert werden kann, bevor die Anlage befestigt wird, was die Montage vereinfacht. Außerdem kann die Anlage leicht ausgetauscht oder vom Dach entfernt werden, z. B. zu Wartungs- oder Reparaturzwecken, ohne dass das Dach oder eine das Dach schützende Abdichtungslage beschädigt wird. Wie in **Fig. 1** dargestellt, ist die von der Verankerungsanordnung 50 bereitgestellte Manschette 20 seitlich wesentlich größer dimensioniert als die Verankerungsplatte 10. Mit anderen Worten, die Manschette 20 hat Außenlängen- und -breitenabmessungen, die wesentlich größer sind als die Außenlängen- und -breitenabmessungen der Verankerungsplatte 10. Im Falle einer im Wesentlichen kreisförmigen Manschette und einer kreisförmigen Verankerungsplatte ist der Radius der Manschette 20 wesentlich größer als der Radius der Verankerungsplatte 10. Obwohl in der Abbildung eine im Wesentlichen kreisförmige Manschette dargestellt ist, ist es für den Fachmann offensichtlich, dass die Manschette 20 eine Vielzahl unterschiedlicher Formen annehmen kann. So kann die Manschette 20 alternativ elliptisch, rechteckig, dreieckig oder jede andere Form oder Kombination von Formen, z. B. rechteckig mit abgerundeten Ecken, sein. Die Manschette 20 wird typischerweise komplementär zur Form der Verankerungsplatte 10 geformt sein, z. B. eine im Wesentlichen kreisförmige Manschette und Verankerungsplatte, wie in **Fig. 1** dargestellt, dies ist jedoch für die Erfindung nicht wesentlich. Zum Beispiel kann eine rechteckige Manschette mit einer kreisförmigen Verankerungsplatte auch ohne Beeinträchtigung der Wirksamkeit der Erfindung vorgesehen werden.

Die Manschette 20 weist eine Öffnung 25 auf, die sich von einer Unterseite zu einer Oberseite der Manschette 20 erstreckt. Die Öffnung 25 ist so gestaltet, dass sie den Montagestift 15 der Verankerungsplatte 10 aufnehmen kann. Die Position der Öffnung 25 in der Manschette 20 hängt von der Position des Montagestifts 15 in Bezug auf die Verankerungsplatte 10 ab. Bei einem Montagestift 15, der auf der Verankerungsplatte 10 zentriert ist, befindet sich die Öffnung 25 beispielsweise mittig auf der Manschette 20. Die Öffnung 25 ist so bemessen, dass der Montagestift 15 durch die Öffnung 15 geführt werden kann. Daher kann die Größe oder der Durchmesser der Öffnung 25 der Manschette 20 etwas größer sein als die Größe oder der Durchmesser des Montagestifts 15, den sie aufnehmen soll. Außerdem kann die Form der Öffnung 25 an den Querschnitt des Montagestifts 15 angepasst werden, den sie aufnehmen soll. Im Allgemeinen kann die Form der Öffnung 25 und/oder der Querschnitt des Montagestifts 15 rund, quadratisch oder eine andere geeignete Form sein. Die Öffnung 25 kann sich senkrecht im Inneren der Manschette 20 erstrecken, um z. B. einen senkrecht verlaufenden Montagestift aufzunehmen. Die Öffnung 25 kann jedoch auch in einem bestimmten Winkel zur Oberfläche der Manschette 20 verlaufen, um z. B. einen nicht senkrecht verlaufenden Montagestift aufzunehmen. In diesem Fall kann der Winkel, den die Öffnung 25 relativ zur Oberfläche der Manschette 20 bildet, im Wesentlichen derselbe sein wie der Winkel, in dem sich der Montagestift 15 relativ zur Oberfläche der Verankerungsplatte 10 erstreckt.

Die Manschette 20 besteht in der Regel aus einem halbflexiblen, elastischen Material, das zur Abdichtung eines Flachdachs oder eines Dachs mit geringer Neigung eines Gebäudes verwendet wird. Die Manschette 20 kann beispielsweise aus Bitumen, Polyvinylchlorid (PVC), Keton-Ethylen-Ester (KEE), chlorsulfoniertem Polyethylen (CSPE), Ethylen-Propylen-Dien-Monomer (EPDM), thermoplastischem Polyolefin (TPO) oder einem anderen für den Schutz eines Daches geeigneten Membranmaterial hergestellt sein. Das Material der Manschette 20 kann eine oder mehrere zusätzliche Schichten enthalten, um die mechanischen Eigenschaften der Manschette 20 zu verbessern. In einigen Ausführungsformen umfasst die Manschette 20 mindestens eine Verstärkungsschicht. Beispielsweise kann eine Manschette aus Bitumenmaterial eine darin eingebettete Gewebe- oder Drahtgeflechtschicht, z. B. eine Kupfergeflechtschicht, enthalten. Ein weiteres Beispiel ist eine Manschette aus PVC-Material, in die eine Gewebeschicht eingebettet sein kann. Andere Verstärkungsschichten sind Schichten aus Polyester, Glasfaser, Glasvlies, Aluminium usw. Vorteilhaft ist, dass die zusätzliche Schicht in dem Material, aus dem die Manschette 20 hergestellt ist, die Zugfestigkeit der Manschette 20 verbessert.

Das Material der Manschette 20 kann aus demselben Material bestehen, das für die Abdichtungslage des Daches verwendet wird, auf dem die Verankerungsanordnung 50 montiert ist. Die Manschette 20 kann zum Beispiel aus einer Membranfolie vorgeschnitten werden, die zur Abdeckung eines Rohdachs verwendet wird. Die Manschette 20 hat in diesem Fall im Wesentlichen die gleiche Dicke wie die Abdichtungslage, die die Oberfläche des Daches bedeckt. Zum Beispiel kann die Manschette standardmäßig 6 mm dick sein, wenn Bitumen als Material für die Manschette 20 verwendet wird. Wird PVC als Material gewählt, kann die Manschette 20 standardmäßig 1,8 mm dick sein. Das Material der Manschette 20 muss jedoch nicht dasselbe sein wie das der Abdichtungslage auf dem Dach, auf dem die Verankerungsanordnung 50 montiert ist. Die Manschette 20 kann beispielsweise aus einem anderen Material hergestellt sein, wobei die Dicke der Manschette 20 von der Dicke der Abdichtungslage auf dem Dach abweichen kann.

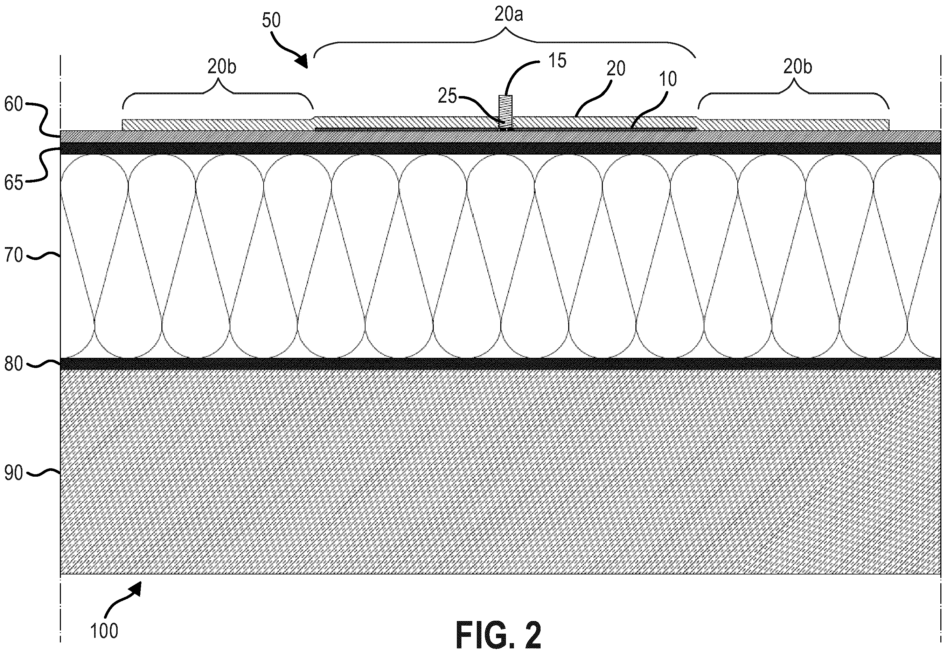

**Fig. 2** zeigt eine Querschnittsansicht der Verankerungsanordnung 50 aus **Fig. 1****,** die auf einem im Wesentlichen flachen Dach 100 befestigt ist. Ein im Wesentlichen flaches Dach ist ein Dach, das entweder flach oder flach geneigt ist. Für die Zwecke dieser Offenbarung wird ein Dach mit geringer Neigung als jedes Dach mit einer Neigung von 10 Grad oder weniger definiert. Eine Neigung von 10 Grad bedeutet, dass das Dach vertikal um 2 Einheiten (z. B. 2 Meter) pro 12 Einheiten (z. B. 12 Meter) horizontal ansteigt. Sofern hier nicht anders angegeben, bezieht sich der Begriff "Dach" auf ein im Wesentlichen flaches Dach. Das im Wesentlichen flache Dach 100 umfasst eine äußere Abdichtungslage 60, die das Dach 100 vor Umwelteinflüssen, z. B. Feuchtigkeit, schützt. Mit anderen Worten, die oberste Schicht des Daches ist in der Regel eine Abdichtungsmembran. Das im Wesentlichen flache Dach 100 kann eine oder mehrere zusätzliche Schichten aufweisen, um zusätzlichen Schutz zu bieten. Das dargestellte Dachbeispiel enthält eine zweite Abdichtungslage 65. Das im Wesentlichen flache Dach 100 umfasst außerdem eine Dämmungslage 70, um den Wärmewiderstand des Daches 100 auf einen bestimmten Wert zu bringen und so den Wärmeverlust zu begrenzen, und eine Dampfsperre 80, die auch als Dampfsperre bezeichnet wird, um zu verhindern, dass Feuchtigkeit von den darunter liegenden Strukturen nach oben dringt und ihren Weg in die Dämmungslage 70 findet, wodurch Kondensation unter den Abdichtungslagen 60 und 65 vermieden wird. Die oben erwähnte erste Abdichtungslage 60, die zweite Abdichtungslage 65, die Dämmungslage 70 und die Dampfsperre 80 werden nacheinander über der tragenden Dachkonstruktion 90 des im Wesentlichen flachen Daches 100 angeordnet.

Wie dargestellt, ist die Verankerungsplatte 10 auf der Abdichtungslage 60 angeordnet, wobei der Montagestift 15 nach oben zeigt. Die Verankerungsplatte 10 wird in der Regel an einer Stelle des Daches auf der Membran oder der Dachhaut positioniert, an der die technische Anlage (nicht dargestellt) befestigt werden soll. Die Manschette 20 ist so über der Verankerungsplatte 10 angeordnet, dass die Öffnung 25 der Manschette 20 in den Montagestift 15 der darunter liegenden Verankerungsplatte 10 eingreift. Wie bereits erwähnt, kann die Manschette 20 aus demselben Material bestehen wie die Abdichtungslage 60. Die Manschette 20 kann zum Beispiel aus einem Membranmaterial vorgeschnitten werden, das zum Abdecken eines Rohdachs verwendet wird. Es ist zu beachten, dass die Verankerungsanordnung 50 nicht auf einem Dach angeordnet sein muss, damit die Öffnung 25 den Montagestift 15 aufnehmen kann. Die Manschette 20 kann zunächst über der Verankerungsplatte 10 angeordnet werden, bevor die Verankerungsplatte 10 auf der Abdichtungslage 60 positioniert wird. Das heißt, die Manschette 20 kann bereits an der Verankerungsplatte 10 anliegen und somit gemeinsam als Verankerungsanordnung 50 mit dem Montagestift 15 nach oben auf der Abdichtungslage 60 angeordnet sein. **Fig. 2** zeigt lediglich eine statische Situation und impliziert somit keine bestimmte Reihenfolge, in der die Manschette 20 über die Verankerungsplatte 10 gelegt wird.

Da die Manschette 20 wesentlich größer dimensioniert ist als die Verankerungsplatte 10, steht nur ein Teil der unteren Fläche der Manschette 20 in direktem Kontakt mit der (oberen Fläche der) Verankerungsplatte 10. Somit definiert die Anordnung einen ersten Abschnitt 20a und einen zweiten Abschnitt 20b der Manschette 20. Der erste Abschnitt 20a der Manschette 20 überlappt direkt die darunter liegende Verankerungsplatte 10, d.h. er berührt diese. Der zweite Abschnitt 20b der Manschette 20 reicht über den Umfang der Verankerungsplatte 10 hinaus und steht somit in direktem Kontakt mit der darunter liegenden Abdichtungslage 60. Der zweite Abschnitt 20b der Manschette 20 ist mit der Abdichtungslage 60 verbunden, um die Verankerungsanordnung 50 an der Abdichtungslage 60 zu befestigen und so die Verankerungsanordnung 50 auf dem im Wesentlichen flachen Dach zu fixieren. Das Verbinden des zweiten Abschnitts 20b der Manschette 20 mit der Abdichtungslage 60 kann durch Erhitzen des zweiten Abschnitts 20b bis zum Schmelzen und anschließendes festes Andrücken des zweiten Abschnitts 20b gegen die Abdichtungslage 60 erfolgen, so dass sie thermisch miteinander verschmelzen. Alternativ kann das Verbinden durch Auftragen eines Klebstoffs auf die Unterseite des zweiten Abschnitts 20b und/oder die Oberseite der Abdichtungslage 60 und anschließendes festes Andrücken des zweiten Abschnitts 20b gegen die Abdichtungslage 60 erfolgen, um eine feste Verbindung herzustellen.

Unabhängig davon, ob der zweite Abschnitt 20b mit der Abdichtungslage 60 durch eine thermische Schweißung oder einen Klebstoff verbunden wird, kann das Verbinden zusätzlich die Verbindung des ersten Abschnitts 20a der Manschette 20 mit der Verankerungsplatte 10 umfassen, z. B. durch Auftragen eines Klebstoffs auf die Unterseite des ersten Abschnitts 20a und/oder die Oberseite der Verankerungsplatte 10 und Pressen des ersten Abschnitts 20a gegen die Verankerungsplatte 10, um eine feste Verbindung herzustellen. Zusätzlich oder alternativ zur Verklebung des ersten Abschnitts 20a mit der darunter liegenden Verankerungsplatte 10 kann die Verklebung auch die Verklebung der Unterseite der Verankerungsplatte 10 mit der Abdichtungslage 60, auf der sie ruht, umfassen, z. B. durch Auftragen eines ähnlichen Klebstoffs wie der, der zur Verklebung des ersten Abschnitts 20a mit der Verankerungsplatte 10 verwendet wurde. Geeignete Klebstoffe sind für den Fachmann ohne weiteres erkennbar.

Die Größe des zweiten Abschnitts 20b der Manschette 20 hängt von der Dimensionierung der Manschette 20 im Verhältnis zu den Abmessungen der Verankerungsplatte 10 ab. Um die Festigkeit der Verbindung zwischen dem zweiten Abschnitt 20b und der Abdichtungslage 60 zu verbessern, kann die Manschette 20 so dimensioniert werden, dass sie einen größeren zweiten Abschnitt 20b definiert, in dem die Manschette 20 über die Abdichtungslage 60 hinausragt, d. h. sich über diese hinaus erstreckt. Dadurch ergibt sich eine größere Fläche, auf der der zweite Abschnitt 20b mit der darunter liegenden Abdichtungslage 60 verbunden werden kann. In einer Ausführungsform ist die Manschette 20 so dimensioniert, dass sie einen zweiten Abschnitt 20b definiert, der sich mindestens 8 cm vom Umfang der Verankerungsplatte 10 erstreckt. Bei einer im Wesentlichen kreisförmigen Verankerungsplatte mit einem Radius von 10 cm kann die Manschette 20 beispielsweise so bemessen sein, dass sie einen Radius von 18 cm hat. Vorzugsweise ist die Manschette 20 so bemessen, dass sie einen zweiten Abschnitt 20b definiert, der sich mindestens 10 cm vom Umfang der Verankerungsplatte 10 erstreckt. Bleibt man bei der Verankerungsplatte des vorangegangenen Beispiels, so kann die Manschette 20 beispielsweise so bemessen sein, dass sie einen Radius von 20 cm aufweist.

Manschetten aus Dachhaut- oder Membranmaterial sind aus dem Stand der Technik bekannt, um Dachflächen mit einer Abdichtungslage abzudichten, z.B. um das Dach nach einer Durchdringung oder Beeinträchtigung des Daches wieder abzudichten. Der Erfinder der vorliegenden Erfindung hat die überraschende Erkenntnis gewonnen, dass die Verankerungsplatte 10 und damit die Verankerungsanordnung 50 ausschließlich durch Verbinden/Verklebung des zweiten Abschnitts 20b der Manschette 20 mit der Abdichtungslage 60 auf dem im Wesentlichen ebenen Dach 100 befestigt werden kann. Mit anderen Worten, die Verankerungsanordnung 50 kann sicher und zuverlässig auf dem Dach 100 befestigt werden, ohne dass das Dach 100 durchdrungen werden muss, z.B. mit mechanischen Befestigungsmitteln oder ohne Verwendung eines Ballastierungssystems. Daher beeinträchtigt die Verwendung der erfindungsgemäßen Verankerungsanordnung 50 zur Befestigung der Anlage auf dem Dach 100 nicht die Integrität des Daches. Dies ist sehr vorteilhaft für den Schutz der Abdichtungslage 60 und anderer Schichten des Daches 100 sowie für die Verlängerung der Nutzungsdauer des Daches.

Um die Zuverlässigkeit der Befestigung der Verankerungsanordnung 50 auf dem Dach 100 zu verbessern, kann das Material der Manschette 20 eine oder mehrere zusätzliche Schichten enthalten, wie zuvor beschrieben. Eine Manschette aus Bitumen kann beispielsweise eine darin eingebettete Gewebe- oder Drahtgitterschicht, z. B. eine Kupfergitterschicht, enthalten. Ein weiteres Beispiel ist eine Manschette aus PVC, in die eine Gewebeschicht eingebettet sein kann. Die zusätzliche Schicht in dem Material, aus dem die Manschette 20 hergestellt ist, verbessert vorteilhafterweise die Zugfestigkeit der Manschette 20, ist aber für die Erfindung keineswegs wesentlich.

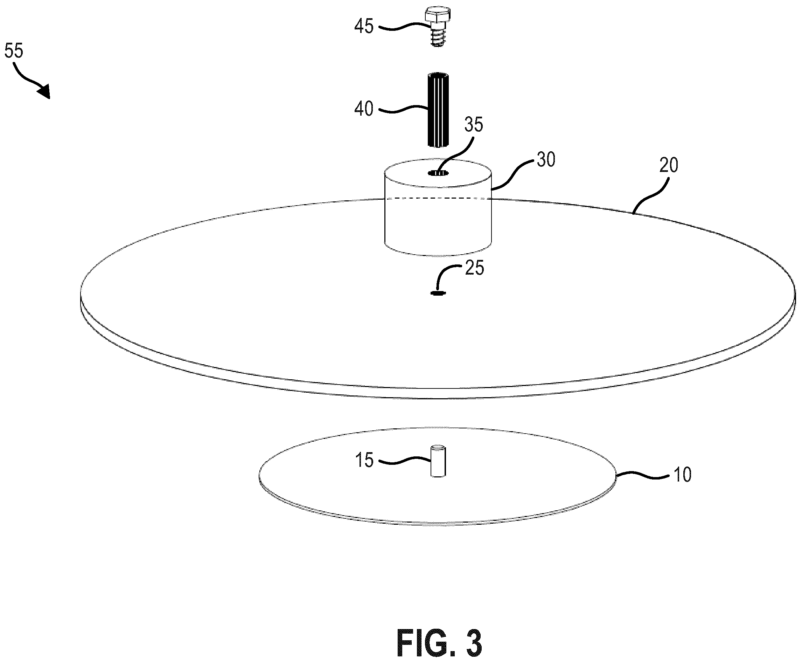

**Fig. 3** zeigt eine Explosionsdarstellung einer Verankerungsanordnung 55 gemäß einer weiteren Ausführungsform. Wie die Verankerungsanordnung 50 dient die Verankerungsanordnung 55 zur Befestigung einer Anlage auf einer Abdichtungslage eines im Wesentlichen flachen Gebäudedaches. Wie dargestellt, umfasst die Verankerungsanordnung 55 gemäß der weiteren Ausführungsform eine Verankerungsplatte 10 mit einem Montagestift 15, eine Manschette 20, die eine Öffnung 25 definiert, ein Verlängerungselement 40, eine Auflagerhilfe 30 mit einem Einlass 35 zum Eingreifen in das Verlängerungselement 40 und ein Befestigungselement 45 zum Eingreifen in das Verlängerungselement 40 und zum lösbaren Verbinden der technischen Anlage (nicht dargestellt) mit der Verankerungsanordnung 55.

Die Verankerungsplatte 10 mit dem Montagestift 15 und die Manschette 20 mit der Öffnung 25 sind identisch mit den in **Fig. 1** dargestellten und oben in Bezug auf die erste Ausführungsanordnung der Verankerungsanordnung 50 beschriebenen Teilen, so dass eine Beschreibung hier nicht wiederholt wird. Stattdessen wird der interessierte Leser für eine Beschreibung dieser Merkmale auf die entsprechenden Abschnitte oben verwiesen. Zur Vermeidung von Zweifeln können die Verankerungsplatte 10 und die Manschette 20 der Verankerungsanordnung 55 gemäß der weiteren Ausführungsform jede der oben für die Verankerungsanordnung 50 genannten Formen annehmen.

Wie bereits erläutert, kann die auf dem im Wesentlichen flachen Dach des Gebäudes zu befestigende Anlage über eine direkte Verbindung mit dem Montagestift 15 der Verankerungsplatte 10 mit der Verankerungsanordnung 50 verbunden werden. In einigen Anwendungsfällen kann es jedoch wünschenswert sein, den Befestigungspunkt der Anlage über den Montagestift 15 der Verankerungsplatte 10 anzuheben. Beispielsweise sind manche Flachdächer mit einer Schicht aus Kies oder anderen Zuschlagstoffen bedeckt, um eine natürliche Schutzschicht für die darunter liegende Dachbahn zu bilden. Bei solchen Dächern ist es notwendig, eine Erhöhung über die Oberfläche der Kiesschicht oder des Dachzuschlags hinaus zu realisieren. Dies kann mit Hilfe der Verankerungsanordnung 55 gemäß der weiteren Ausführungsform erreicht werden. Durch die Befestigung der technischen Anlage (nicht dargestellt) an dem Verlängerungselement 40 über das Befestigungselement 45 statt direkt an dem Montagestift 15 wird eine Montageerhöhung über die Oberfläche der Manschette 20 hinaus realisiert. Das Ausmaß der Erhöhung wird durch die Länge des Verlängerungselements 40 bestimmt. Somit kann der Befestigungspunkt der Anlage an der Verankerungsanordnung 55 durch entsprechende Dimensionierung der Länge des Verlängerungselements 40 bequem auf eine beliebige Höhe angehoben werden.

Die Auflagerhilfe 30 ist so dimensioniert, dass sie die gleiche Länge wie das Verlängerungselement 40 hat, aber im Einsatz keine statische Funktion erfüllt. Mit anderen Worten: Die Auflagerhilfe 30 dient nicht dazu, eine Überhöhung über die Manschette 20 zu realisieren. Vielmehr dient die Auflagerhilfe 30 dem Techniker zur Vereinfachung des Montageprozesses. Genauer gesagt zeigt die Auflagerhilfe 30 den Befestigungspunkt der Anlage nach der Montage der Verankerungsanordnung 55 an. Technisch gesehen ist die Auflagerhilfe 30 für die Montage der Verankerungsanordnung 55 an der Anlage nicht zwingend erforderlich und kann daher bei der Verankerungsanordnung 55 entfallen.

Es wird darauf hingewiesen, dass die Auflagerhilfe 30 und das Verlängerungselement 40 aus einem einzigen Teil gefertigt sein können. In diesem Fall werden typischerweise Metalle wie Edelstahl, Aluminium und/oder verzinkter Stahl verwendet, um den Witterungseinflüssen zu widerstehen und im Falle einer Verbrennung Feuerfestigkeit zu gewährleisten. Der Fachmann wird jedoch leicht erkennen, dass auch andere Materialien möglich sind, vorausgesetzt, die Tragfähigkeit der Verbindung und die Brandschutzanforderungen für den Einsatz auf dem Dach werden erfüllt. Ebenso kann bei der Variante mit einteiliger Auflagerhilfe 30 und Verlängerungselement 40 der Montagestift 15 auch auf andere Weise mit dem Verlängerungselement 40 verbunden werden, z.B. durch eine Steckverbindung oder eine Verriegelungsvorrichtung, z.B. ein Schnapp- oder Klicksystem zur Befestigung an dem neu gebildeten Verlängerungselement.

Gemäß einer bevorzugten Ausführungsform der Verankerungsanordnung 55 weisen der Montagestift 15 der Verankerungsplatte 10 und das Befestigungselement 45 ein Außengewinde auf, und das Verlängerungselement 40 enthält eine Gewindehülse zum Eingriff in den mit Gewinde versehenen Montagestift und das mit Gewinde versehene Befestigungselement. Bei dem Befestigungselement 45 kann es sich beispielsweise um einen Bolzen handeln, dessen Außengewindeprofil mit dem Außengewindeprofil des Montagestifts 15 übereinstimmt; in diesem Fall weist der Kragen des Verlängerungselements 40 vorzugsweise ein entsprechendes Gewinde auf. Dies ist jedoch nicht unbedingt erforderlich. In anderen Ausführungsformen können das Gewinde des Montagestifts 15 und das Gewinde des Befestigungselements 45 unterschiedlich sein. In diesem Fall weist der Gewindekragen des Verlängerungselements 40 zwei unterschiedliche Innengewinde auf, d. h. ein Innengewinde am oberen Teil des Kragens, das mit dem Außengewinde des Befestigungselements 45 übereinstimmt, und ein anderes, anderes Innengewinde am unteren Teil des Kragens, das mit dem Außengewinde des Montagestifts 15 übereinstimmt.

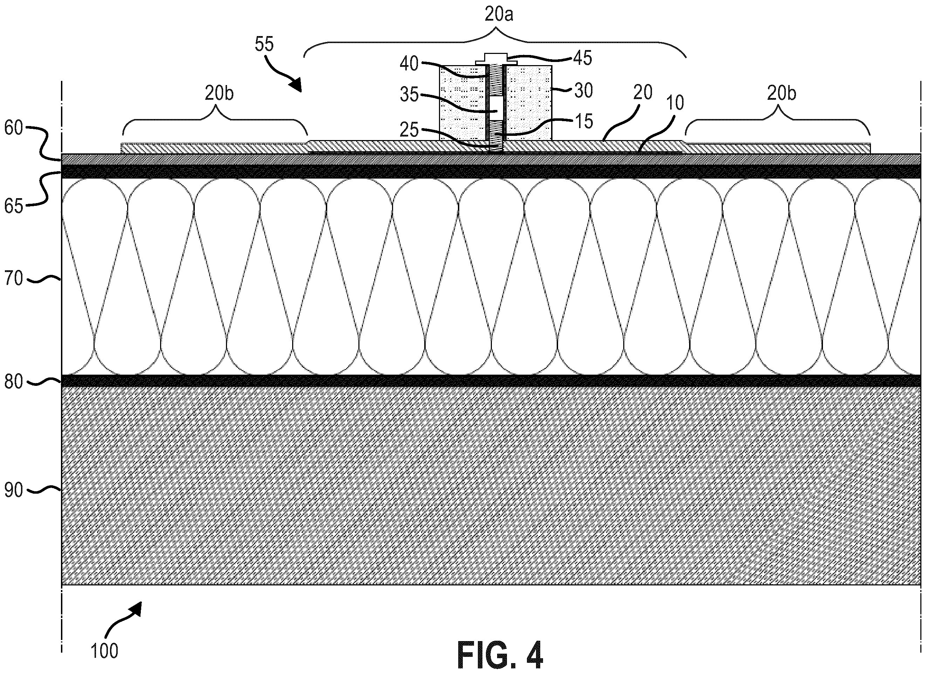

**Fig. 4** zeigt eine Querschnittsansicht der Verankerungsanordnung 55 aus **Fig. 3****,** die auf einem im Wesentlichen flachen Dach 100 befestigt ist. Die Verankerungsplatte 10 mit dem Montagestift 15 und die Manschette 20 mit der Öffnung 25 sind identisch mit denen, die in **Fig. 1** dargestellt und oben in Bezug auf die erste Ausführungsform der Verankerungsanordnung 50 beschrieben sind. Darüber hinaus sind das im Wesentlichen flache Dach 100 und seine Schichten identisch mit denen, die in **Fig. 2** dargestellt und oben auch in Bezug auf die erste Ausführungsform der Verankerungsanordnung 50 beschrieben sind. Daher wird eine Beschreibung in jedem einzelnen Fall hier nicht wiederholt. Stattdessen wird der interessierte Leser für eine Beschreibung dieser Merkmale und ihrer Funktionsweise auf die entsprechenden Abschnitte oben verwiesen.

Wie dargestellt, ist das Verlängerungselement 40 so über der Manschette 20 angeordnet, dass das Verlängerungselement 40 in den Montagestift 15 der darunter liegenden Verankerungsplatte 10 eingreift. Der Montagestift kann ein Außengewinde für den Eingriff in das Verlängerungselement 40 aufweisen. In diesem Fall kann das Verlängerungselement 40 einen Kragen mit einem passenden Innengewinde aufweisen, damit es mit dem Montagestift 15 verbunden werden kann. Dies ist jedoch nicht unbedingt erforderlich. Wie der Fachmann weiß, kann der Montagestift auch auf andere Weise mit dem Verlängerungselement 40 verbunden werden, z. B. durch eine Steckverbindung oder eine Verriegelungsvorrichtung, z. B. ein Schnapp- oder Klicksystem zur Befestigung am Verlängerungselement 40. Die Anlage (nicht abgebildet) wird mit Hilfe des Befestigungselements 45 am Verlängerungselement 40 befestigt. Das Befestigungselement 45 kann ein Außengewinde aufweisen, wobei das Verlängerungselement 40 eine Gewindehülse zum Eingriff in das Befestigungselement mit Gewinde aufweisen kann. Optional ist eine Auflagerhilfe 30 mit einem Einlass 35 vorgesehen und das externe Verlängerungselement 40 wird in den Einlass 35 der Auflagerhilfe 30 eingeführt, bevor das Verlängerungselement 40 mit dem Montagestift 15 verbunden wird. Alternativ kann die Auflagerhilfe 30 über das Verlängerungselement 40 gestülpt werden, nachdem dieses mit dem Montagestift 15 verbunden wurde. Wie bereits erwähnt, ist die Anbringung der Auflagerhilfe 30 für die Befestigung der Anlage nicht zwingend erforderlich, sie vereinfacht jedoch die Montage der Anlage an der Verankerungsanordnung 55 auf dem im Wesentlichen flachen Dach 100. Wie in der Abbildung dargestellt, wird durch die Bereitstellung des Verlängerungselements 40 der Anschlusspunkt der technischen Anlage über das im Wesentlichen flache Dach 100 angehoben. Die Höhe über dem Dach 100 kann durch geeignete Dimensionierung der Länge des Verlängerungselements 40 gesteuert werden. Dies hat den Vorteil, dass die Verankerungsanordnung 55 gemäß der zweiten Ausführungsform auch zur Befestigung einer Anlage auf einem Dach 100 verwendet werden kann, das eine Schicht aus Kies oder anderem Zuschlagsmaterial aufweist.

Vorzugsweise ist die an der Verankerungsanordnung 50 der ersten Ausführungsform oder der Verankerungsanordnung 55 der zweiten Ausführungsform zu befestigende Anlage eine technische Anlage. Beispiele für Anlagen, die befestigt werden können, sind eine Solaranlage mit photovoltaischen Zellen (z. B. eine thermische Solaranlage), ein Blitzschutzsystem, ein Klimagerät, z. B. eine Heizungs-, Lüftungs- und Klimaanlage (HVAC), eine Telekommunikationsanlage (z. B. Antenne, Satellitenschüssel usw.), eine Werbeanlage (z. B. eine Werbetafel) oder eine andere technische Anlage.

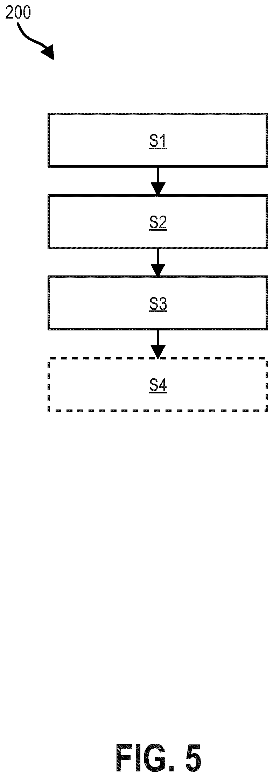

**Fig. 5** zeigt ein schematisches Flussdiagramm eines Verfahrens 200 zur Befestigung einer Verankerungsanordnung an einer Abdichtungslage eines im Wesentlichen flachen Gebäudedaches. Die im Flussdiagramm dargestellten Schritte werden typischerweise von einem Dachdecker oder der Person durchgeführt, die die Anlage auf dem Dach des Gebäudes montiert. Das Verfahren 200 kann entweder mit der ersten Ausführungsform der Verankerungsanordnung 50 oder mit der oben beschriebenen und in **Fig. 1** bzw. **Fig. 3** dargestellten weiteren Ausführungsform der Verankerungsanordnung 55 durchgeführt werden.

In Schritt S1 wird die Verankerungsplatte 10 auf der Abdichtungslage 60, die das im Wesentlichen flache Dach 100 bedeckt, an einer vorbestimmten Stelle so positioniert, dass die Oberseite der Verankerungsplatte 10 von der Abdichtungslage 60 des Daches weg zeigt. In Ausführungsformen, bei denen die Verankerungsplatte 10 und der Montagestift 15 als ein Teil hergestellt oder bereits zusammengebaut sind (wenn sie als separate Teile geliefert werden), zeigt der Montagestift 15 von der Abdichtungslage 60 des Daches weg. Dementsprechend berührt die Unterseite der Verankerungsplatte 10 die Abdichtungslage 60 des im Wesentlichen flachen Daches 100 an der vorbestimmten Stelle physisch.

In Schritt S2 wird die Manschette 20 so über der Oberseite der Verankerungsplatte 10 angeordnet, dass die Öffnung 25 der Manschette 20 den Montagestift 15 der Verankerungsplatte 10 aufnimmt. Indem die Manschette 20 auf diese Weise mit der Verankerungsplatte 10 in Eingriff gebracht wird, erscheint der Montagestift 15 auf der anderen Seite der Manschette 20 und ist somit von der Oberseite der Manschette 20 zugänglich, um die Anlage mit der Verankerungsanordnung 50, 55 zu verbinden.

Da die Manschette 20 im Verhältnis zur darunter liegenden Verankerungsplatte 10 größere seitliche Abmessungen hat, definiert die Anordnung der Manschette 20 über der Verankerungsplatte 10 einen ersten Abschnitt 20a der Manschette 20, der die Verankerungsplatte 10 überlappt, und einen zweiten Abschnitt 20b der Manschette 20, der sich über den Umfang oder den Rand der Verankerungsplatte 10 hinaus erstreckt. Mit anderen Worten: Der erste Abschnitt 20a der Manschette 20 berührt die darunter liegende Verankerungsplatte 10 und der zweite Abschnitt 20b der Manschette 20 berührt die Abdichtungslage 60 des Daches 100. Das Maß, um das sich der zweite Abschnitt 20b über den Umfang der Verankerungsplatte 10 hinaus erstreckt, wird durch den relativen Unterschied in den seitlichen Abmessungen der Verankerungsplatte 10 in Bezug auf die Manschette 20 bestimmt. In einer Ausführungsform ist die Manschette 20 so dimensioniert, dass sie einen zweiten Abschnitt 20b definiert, der sich mindestens 8 cm über den Umfang der Verankerungsplatte 10 hinaus erstreckt. In einer bevorzugten Ausführungsform ist die Manschette 20 so bemessen, dass sie einen zweiten Abschnitt 20b bildet, der sich mindestens 10 cm vom Umfang der Verankerungsplatte 10 erstreckt.

In Schritt S3 wird der zweite Abschnitt 20b der Manschette 20 fest mit der darunter liegenden Abdichtungslage 60 verbunden, um die Verankerungsplatte 10 fest mit der Abdichtungslage 60 des Flachdachs 100 zu verbinden. Durch diesen Schritt wird die Verankerungsplatte 10 effektiv zwischen der darunter liegenden Abdichtungslage 60 und der darüber liegenden Manschette 20 eingeklemmt. In einer Ausführungsform wird der zweite Abschnitt 20b mit der darunter liegenden Abdichtungslage 60 durch Heißschweißen verbunden, so dass der zweite Abschnitt 20b thermisch mit der Abdichtungslage 60 verschmilzt und eine einzige und dauerhafte Dichtung bildet. Dies kann durch Erhitzen des zweiten Abschnitts 20b der Manschette mit Heißluft erreicht werden. Sobald der zweite Abschnitt 20b ausreichend geschmolzen ist, kann er gegen die darunter liegende Abdichtungslage 60 gepresst oder gedrückt werden, um die feste Verbindung herzustellen.

In einer anderen Ausführungsform wird der zweite Abschnitt 20b fest mit der darunter liegenden Abdichtungslage 60 verbunden, indem ein geeigneter Klebstoff auf die Unterseite der Manschette 20 und/oder die Oberseite der darunter liegenden Abdichtungslage aufgetragen und dann der zweite Abschnitt 20b gegen die Abdichtungslage 60 gedrückt wird, so dass der zweite Abschnitt 20b fest mit der Abdichtungslage 60 verbunden wird und eine dauerhafte und sichere Abdichtung bildet. Dem Fachmann sind Klebstoffe bekannt, die für eine dauerhafte und feste Verbindung mit den genannten Materialien auf einem Dach geeignet sind, so dass diese hier nicht näher erläutert werden.

Optional kann der erste Abschnitt 20a der Manschette 20 mit der darunter liegenden Verankerungsplatte 10 verklebt werden, um die Verankerungsplatte 10 mit der Abdichtungslage 60 des Flachdachs 100 fester zu verbinden. Beispielsweise kann der gleiche Klebstoff wie in der zweiten Ausführungsform oben oder ein anderer Klebstoff auf die Unterseite des ersten Abschnitts 20a und/oder die Oberseite der Verankerungsplatte 10 aufgetragen werden. Danach kann der erste Abschnitt 20a der Manschette 20 gegen die Verankerungsplatte 10 gedrückt werden, so dass der erste Abschnitt 20a fest mit der Verankerungsplatte 10 verbunden wird, um eine sicherere Befestigung zu gewährleisten. Zusätzlich oder alternativ kann die Unterseite der Verankerungsplatte 10 mit der Abdichtungslage 60, auf der sie ruht, durch Auftragen eines ähnlichen oder anderen Klebstoffs verklebt werden.

Im optionalen Schritt S4 wird eine Anlage mit der Verankerungsanordnung 50 oder 55 verbunden. Wie bereits erläutert, kann die Anlage direkt mit dem Montagestift 15 der Verankerungsplatte 10 verbunden werden. Der Montagestift 15 kann beispielsweise ein Innen- oder Außengewinde, eine Stift- (Buchsen-) Verbindungsvorrichtung oder eine Verriegelungsvorrichtung, z. B. eine Schnapp- oder Klickbefestigung, aufweisen, um die Anlage lösbar mit der Verankerungsanordnung 50 zu verbinden. Alternativ kann die Anlage auch indirekt über ein oder mehrere zusätzliche Strukturelemente mit dem Montagestift 15 verbunden werden. Beispielsweise kann die Verankerungsanordnung 55 zusätzlich ein Verlängerungselement 40 und ein Befestigungselement 45 sowie optional eine Auflagerhilfe 30 mit einem Einlass 35 zur Befestigung der Anlage an der Verankerungsanordnung aufweisen. Letzteres ist, wie oben beschrieben, vorteilhaft für die Verbindung der Anlage mit der Verankerungsanordnung 55, wenn das Flachdach mit einer Kies- oder sonstigen Zuschlagstoffschicht bedeckt ist.

Unabhängig von der Art der Verbindung/Verklebung des zweiten Abschnitts 20b der Manschette 20 mit der Abdichtungslage 60 des im Wesentlichen flachen Daches 100 in Schritt S3 kann die Verankerungsanordnung 50 oder 55 und damit die Anlage ausschließlich mit dieser Verbindung/Verklebung und damit ohne die Verwendung eines zusätzlichen Befestigungsmittels, z.B. einer mechanischen Befestigung mit Schrauben oder einem Ballastierungssystem, auf dem Dach befestigt werden. Daher beeinträchtigt die Befestigung der Anlage auf dem Dach 100 gemäß dem Verfahren 200 nicht die Integrität des Daches 100. Dies ist sehr vorteilhaft für den Schutz der Abdichtungslage 60 und anderer Schichten auf dem Dach 100 sowie für die Verlängerung der Nutzungsdauer des Daches 100. Vorteilhafterweise erfordert das Verfahren auch keine Neuabdichtung des Daches 100, nachdem die Verankerungsanordnung auf dem Dach befestigt wurde, da Durchdringungen vollständig vermieden werden.

Um die Zuverlässigkeit der Befestigung der Verankerungsanordnung 50 oder 55 und der Installation auf dem Dach 100 zu verbessern, kann das Material der Manschette 20 eine oder mehrere zusätzliche Schichten enthalten, wie zuvor beschrieben. In einigen Ausführungsformen umfasst die Manschette 20 eine Verstärkungsschicht. Beispielsweise kann eine Manschette 20 aus Bitumenmaterial eine darin eingebettete Gewebe- oder Drahtgitterschicht enthalten. Ein weiteres Beispiel ist eine Manschette 20 aus PVC, in die eine Gewebeschicht eingebettet sein kann. Andere Verstärkungsschichten sind Schichten aus Polyester, Glasfaser, Glasvlies, Aluminium usw. Obwohl die zusätzliche Lage nicht unbedingt erforderlich ist, verbessert sie vorteilhaft die Zugfestigkeit der Manschette 20 und sorgt so für eine zuverlässigere Befestigung der Verankerungsanordnung 50 oder 55 und der Installation auf dem Dach 100.

Die in **Fig. 5** dargestellten Schritte können auch in einer anderen Reihenfolge durchgeführt werden, und die technische Aufgabe trotzdem lösen. Beispielsweise kann Schritt S1 mit Schritt S2 ausgetauscht werden, d. h. die Manschette 20 kann so über der Oberseite der Verankerungsplatte 10 angeordnet werden, dass die Öffnung 25 in den Montagestift 10 eingreift, bevor die Verankerungsplatte 10 an der vorgegebenen Stelle auf dem Dach positioniert wird.

Gemäß einer weiteren Ausführungsform der Erfindung wird die Verankerungsanordnung 50, 55 gemäß den oben beschriebenen Ausführungsformen zur Befestigung der technischen Anlage auf der Abdichtungslage 60 des im Wesentlichen flachen Gebäudedachs 100 verwendet. Bei der Anlage kann es sich um eine oder mehrere der folgenden Arten handeln: eine Heizungs-, Lüftungs- und Klimaanlage (HVAC), eine photovoltaische Solaranlage, eine thermische Solaranlage, eine Blitzschutzanlage, eine Antennenanlage, eine Satellitenschüsselanlage, eine Werbeanlage, z.B. eine Werbetafel, oder jede andere im Stand der Technik bekannte Art von technischer Anlage.

Wie hier und in den beigefügten Ansprüchen verwendet, bezieht sich der Begriff "Anlage" auf jede technische Einrichtung, die auf einem im Wesentlichen flachen Dach montiert werden kann. Beispiele sind eine Solaranlage mit Photovoltaikzellen, eine Blitzschutzanlage, eine Heizungs-, Lüftungs- und Klimaanlage, z. B. ein Klimagerät, eine Telekommunikationsanlage, eine Werbeanlage usw. Der Begriff umfasst jedoch auch jede Tragkonstruktion, z. B. Rahmen, Halterung, Gestell, Montageschiene usw., die zusätzlich zur Befestigung der Anlage auf dem Dach dient.

Es wird deutlich, dass die obige Beschreibung der bevorzugten Ausführungsformen der Erfindung unter Bezugnahme auf die Zeichnungen nur beispielhaft erfolgt ist. Dementsprechend wird der Fachmann erkennen, dass verschiedene Änderungen, Modifikationen und/oder Ergänzungen an den insbesondere beschriebenen und abgebildeten Teilen vorgenommen werden können, ohne dass der Umfang der Erfindung, wie er in den beigefügten Ansprüchen definiert ist, beeinträchtigt wird.

### Bezugszeichenliste

- 10: Verankerungsplatte
- 15: Montagestift
- 20: Manschette
- 20a: erster Abschnitt
- 20b: zweiter Abschnitt
- 25: Öffnung
- 30: Auflagerhilfe
- 35: Einlass
- 40: Verlängerungselement
- 45: Befestigungselement
- 50,55: Verankerungsanordnung
- 60: erste Abdichtungslage
- 65: zweite Abdichtungslage
- 70: Dämmungslage
- 80: Dampfsperre
- 90: Dachkonstruktion
- 100: Flachdach oder flach geneigtes Dach

## Patentansprüche

1. Verankerungsanordnung (50, 55) zur Befestigung einer Anlage auf einer Abdichtungslage (60) eines im Wesentlichen flachen Daches (100), wobei die Anordnung (50, 55) umfasst:
- eine Verankerungsplatte (10) mit einem Montagestift (15), der starr an einer Seite der Verankerungsplatte (10) angebracht und so konfiguriert ist, dass er lösbar mit der Anlage verbunden werden kann; und
- eine Manschette (20) mit einer Öffnung (25), die sich von einer Unterseite zu einer Oberseite der Manschette (20) erstreckt und zur Aufnahme des Montagestifts (15) ausgebildet ist;
**dadurch gekennzeichnet, dass** die Manschette (20) wesentlich größer als die Verankerungsplatte (10) dimensioniert ist und, wenn die Öffnung (25) in den Montagestift (15) eingreift, einen ersten Abschnitt (20a), in dem sich die Manschette (20) mit der Verankerungsplatte (10) überlappt, und einen zweiten Abschnitt (20b) definiert, in dem sich die Manschette (20) über den Umfang der Verankerungsplatte (10) hinaus erstreckt, wobei der zweite Abschnitt (20b) zum Verbinden mit der Abdichtungslage (60) konfiguriert ist, so dass die Verankerungsanordnung (10) im Gebrauch durch das Verbinden fest zwischen der Manschette (20) und der Abdichtungslage (60) eingeklemmt ist, wodurch die Verankerungsanordnung (50, 55) an dem im Wesentlichen flachen Dach (100) befestigt wird.

2. Verankerungsanordnung (50, 55) nach Anspruch 1, wobei das Verbinden das Erhitzen und Pressen des zweiten Abschnitts (20b) umfasst, so dass der zweite Abschnitt (20b) thermisch mit der Abdichtungslage (60) verschmilzt.

3. Verankerungsanordnung (50, 55) nach Anspruch 1, wobei das Kleben das Auftragen eines Klebstoffs auf die Unterseite des zweiten Abschnitts (20b) und/oder der Abdichtungslage (60) und das Pressen des zweiten Abschnitts (20b) umfasst, so dass der zweite Abschnitt (20b) fest mit der Abdichtungslage (60) verbunden wird.

4. Verankerungsanordnung (50, 55) nach einem der Ansprüche 1 bis 3, wobei die Manschette (20) so dimensioniert ist, dass sie einen zweiten Abschnitt (20b) definiert, der sich mindestens 8 cm, vorzugsweise mindestens 10 cm, über den Umfang der Verankerungsplatte (10) hinaus erstreckt.

5. Verankerungsanordnung (50, 55) nach einem der Ansprüche 1 bis 4, wobei die Verankerungsplatte (10) aus Stahl, insbesondere aus rostfreiem Stahl, besteht.

6. Verankerungsanordnung (50, 55) nach einem der Ansprüche 1 bis 5, wobei die Manschette (20) aus Bitumen, PVC, KEE, CSPE, EPDM oder TPO-Material besteht.

7. Verankerungsanordnung (50, 55) nach einem der Ansprüche 1 bis 6, wobei die Manschette (20) eine Verstärkungsschicht aufweist.

8. Verankerungsanordnung (50, 55) nach einem der Ansprüche 1 bis 7, wobei der Montagestift (15) ein Innengewinde, ein Außengewinde, eine Stiftverbindungsvorrichtung oder eine Verriegelungsvorrichtung zum lösbaren Verbinden der Anlage mit der Verankerungsanordnung (50, 55) aufweist.

9. Verankerungsanordnung (55) nach einem der Ansprüche 1 bis 8, die ferner ein Verlängerungselement (40), das so konfiguriert ist, dass es die Anlage lösbar mit dem Montagestift (15) koppelt, ein Befestigungselement (45), das so konfiguriert ist, dass es die Anlage mit dem Verlängerungselement (40) koppelt, und optional eine Auflagerhilfe (30) zur Befestigung der Anlage auf dem im Wesentlichen flachen Dach (100) umfasst.

10. Verankerungsanordnung (55) nach einem der Ansprüche 8 und 9, wobei der Montagestift (15) ein Außengewinde und das Verlängerungselement (40) einen Gewindehülse aufweist und wobei das Befestigungselement (45) ein Gewindebefestigungselement ist.

11. Verfahren (200) zur Befestigung einer Verankerungsanordnung (50, 55) nach einem der Ansprüche 1 bis 10 an einer Abdichtungslage (60) eines im Wesentlichen flachen Daches (100), wobei das Verfahren (200) umfasst:
- Positionieren (S1) der Verankerungsplatte (10) auf der Abdichtungslage (60) an einer vorbestimmten Stelle auf dem Dach (100);
- Anordnen (S2) der Manschette (20) über der Verankerungsplatte (10), so dass die Öffnung (25) den Montagestift (15) aufnimmt; und
- Verbinden (S3) des zweiten Abschnitts (20b) der Manschette (20) mit der Abdichtungslage (60), so dass die Verankerungsplatte (10) fest zwischen der Manschette (20) und der Abdichtungslage (60) eingeklemmt wird, wodurch die Verankerungsanordnung (50, 55) an dem im Wesentlichen flachen Dach (100) befestigt wird.

12. Verfahren (200) nach Anspruch 11, wobei das Verbinden (S3) das Erhitzen und Pressen des zweiten Abschnitts (20b) umfasst, so dass der zweite Abschnitt (20b) thermisch mit der Abdichtungslage (60) verschmilzt.

13. Verfahren (200) nach Anspruch 11, wobei das Kleben (S3) das Auftragen eines Klebstoffs auf den zweiten Abschnitt (20b) und/oder die Abdichtungslage (60) und das anschließende Pressen des zweiten Abschnitts (20b) umfasst, so dass der zweite Abschnitt (20b) fest mit der Abdichtungslage (60) verbunden wird.

14. Das Verfahren (200) nach einem der Ansprüche 11 bis 13 umfasst ferner das Koppeln (S4) der Anlage mit dem Montagestift (15) der Verankerungsplatte (10).

15. Verfahren (200) nach einem der Ansprüche 11 bis 13, wobei in Abhängigkeit von Anspruch 8 die Anlage über das Befestigungselement (45) mit dem Verlängerungselement (40) gekoppelt (S4) wird.
